# EUROPÄISCHE PATENTSCHRIFT

(11) **EP 2 612 122 B1**
(45) Veröffentlichungstag und Bekanntmachung des Hinweises auf die Patenterteilung: **19.10.2016**
(21) Anmeldenummer: 11741169.4
(22) Anmeldetag: 25.07.2011
(51) Int. Cl.: G01K 15/00

(54) **VERFAHREN UND VORRICHTUNG ZUR IN SITU KALIBRIERUNG EINES THERMOMETERS**
METHOD AND APPARATUS FOR CALIBRATING A THERMOMETER IN SITU
PROCÉDÉ ET DISPOSITIF D'ÉTALONNAGE D'UN THERMOMÈTRE IN SITU

(30) Priorität: 31.08.2010 DE 102010040039
(43) Veröffentlichungstag der Anmeldung: 10.07.2013
(73) Patentinhaber: Endress+Hauser Wetzer GmbH+Co. KG, 87484 Nesselwang (DE)
(72) Erfinder: SEEFELD, Peter, 87459 Pfronten (DE); BUCHNER, Reinhard, 87484 Nesselwang (DE); BOGUHN, Dirk, 81245 München (DE); SCHALLES, Marc, 99099 Erfurt (DE)
(74) Vertreter: Andres, Angelika Maria
(86) Internationale Anmeldenummer: PCT/EP2011/062753
(87) Internationale Veröffentlichungsnummer: WO 2012/028387

(56) Entgegenhaltungen:
- WO-A1-97/25602
- DE-A1- 4 006 885
- DE-A1- 19 702 140
- DE-A1- 19 941 731

## Beschreibung

Die Erfindung bezieht sich auf eine Vorrichtung zur in situ Kalibrierung eines Thermometers, wobei die Vorrichtung einen Temperatursensor zur Bestimmung einer Temperatur aufweist.

Ferner bezieht sich die Erfindung auf ein Verfahren zur in situ Kalibrierung eines Thermometers.

Die Kalibrierung von Thermometern wird heutzutage üblicherweise in Kalibrierbädern, Öfen oder Fixpunkteinrichtungen durchgeführt. Eine entsprechende Fixpunktzelle ist bspw. in der Patentschrift DE 102004027072 B3 beschrieben. Dabei wird die Messabweichung des zu kalibrierenden Thermometers bei bestimmten Temperaturwerten, auch als fixe Temperaturwerte bezeichnet, bestimmt. Zu diesem Zweck wird das Thermometer aus der Messstelle ausgebaut, in die Kalibriereinrichtung gesteckt und kalibriert. Diese Art der Kalibrierung ist aufgrund des erforderlichen Ausbaus des Thermometers allerdings aufwendig. Aus dem Stand der Technik ist es daher bekannt geworden, Thermometer im eingebauten Zustand zu kalibrieren. Aus der Offenlegungsschrift DE 19941731 A1 ist eine solche miniaturisierte und in ein Thermometer integrierte Fixpunktzelle bekannt geworden. Dabei wird vorgeschlagen, den zu kalibrierenden Temperatursensor in eine in einem Messeinsatz befindliche Zelle zu stecken, welche Zelle mit einer Fixpunktsubstanz, meist ein Metall oder eine eutektische Legierung, gefüllt ist. Wird die Fixpunktsubstanz zum Schmelzen oder Erstarren gebracht, misst das Thermometer die Schmelzpunkttemperatur. Die gemessene Schmelzpunkttemperatur kann dann mit einer hinterlegten Schmelzpunkttemperatur verglichen werden. Dabei ist von Nachteil, dass eine zusätzliche Zelle zum Kapseln der Fixpunktsubstanz erforderlich ist. Dadurch wird die Dynamik, d.h. die Ansprechzeit auf Temperaturänderungen, des Thermometers verschlechtert. Außerdem kann die Fixpunktsubstanz unter Umständen aus der Zelle austreten und so das Thermometer zerstören.

Aus der Patentschrift DE 4032092 C2 ist ein Verfahren zur Ermittlung der Curietemperatur von ferromagnetischen Werkstoffen bekannt geworden, bei denen die abrupte Änderung der Wärmeaufnahme im Bereich der Curietemperatur durch Messung mittels eines Differential-Scanning-Thermoanalysators nicht feststellbar ist, und daher zusätzliche Vorrichtungen zum Anlegen eines magnetischen Feldes vorgesehen sind.

Die Offenlegungsschrift DE 19805184 A1 beschreibt ein Verfahren zur Ermittlung der Temperatur eines piezoelektrischen Elements. Dabei wird über die Kapazität des Piezoelements die Temperatur des Piezoelements bestimmt.

Ferner befasst sich die Patentschrift DE 102005029464 B4 mit der Kompensation von Piezo-Einflüssen auf eine integrierte Halbleiterschaltung.

Die Patentschrift DE 102004003853 B4 bezieht sich auf integrierte Schaltungsanordnungen in einem Halbleitersubstrat und auf ein Konzept, um den negativen Einfluss einer mechanischen Stresskomponente in dem Halbleitersubstrat auf die Parametergenauigkeit und Parameterstabilität einer auf dem Halbleitersubstart integrierten Schaltungsanordnung zu kompensieren.

Schließlich bezieht sich die Patentschrift DE 69130843 T2 auf ein Verfahren und eine Vorrichtung zur Bestimmung der Temperatur eines piezoelektrischen Kristalloszillators.

Die Offenlegungsschrift DE 19954164 A1 beschreibt einen Sensor zur Messung mechanischer Belastungen, die auf eine Oberfläche einer mechanischen Komponente einwirken.

Aus der Patentschrift EP 1247268 B2 ist eine weitere Art der in situ Kalibrierung mehrerer integrierter Temperatursensoren bekannt geworden. Hierzu sind in einen Thermometereinsatz zusätzlich zu einem primären Temperatursensor ein oder mehrere Referenzelemente in Form von Temperatursensoren eingebaut. Diese unterscheiden sich üblicherweise im Aufbau oder im verwendeten Material von dem primären Temperatursensor und weisen daher im Vergleich zu dem primären Temperatursensor andere Alterungseffekte und Kennliniendriften als dieser auf. So werden bspw. parallel zu primären Pt100-Widerstandssenoren Halbleiter-sog. NTC/PTC-Widerstände als Referenzelemente verwendet. Der signifikante Nachteil dieser Anordnungen besteht darin, dass als Referenz nur Sensoren mit einer anderen Kennlinie oder anderen Alterungseigenschaften während des Einsatzes verwendet werden können. Diese müssen noch dazu genauer bekannt sein oder die Kennlinienänderungen durch Alterung sollten geringer sein als beim zu überwachenden primären Temperatursensor. Gerade im Fall der Kalibrierung/Validierung von Widerstandsthermometern, die in weiten Temperaturbereichen bereits sehr langzeitstabil sind, ist dies bislang nicht erreichbar.

Der Erfindung liegt daher die Aufgabe zugrunde, eine langzeitstabile Kalibrierung bzw. Validierung eines Temperatursensors zu ermöglichen.

Die Aufgabe wird erfindungsgemäß dadurch gelöst, dass ein Referenzelement zur Kalibrierung des Temperatursensors vorgesehen ist, wobei das Referenzelement wenigstens teilweise aus einem ferroelektrischen Material besteht, das im zur Kalibrierung des Temperatursensors relevanten Temperaturbereich eine Phasenumwandlung bei zumindest einer vorgegebenen Temperatur erfährt.

Die Erfindung betrifft also die in situ Kalibrierung von Thermometern, bei dem der Temperatursensor (Primärsensor) mit Hilfe eines bspw. ebenfalls im Thermometereinsatz befindlichen Sekundärsensors (Referenzelement) kalibriert oder validiert wird. Die Phasenumwandlung und die damit einhergehende Änderung wenigstens eines Teils der physikalischen Eigenschaften des Referenzelements können dann genutzt werden, um den Temperatursensor zu kalibrieren. Das Referenzelement besteht dabei wenigstens teilweise aus einem ferroelektrischen Material, welches im zur Kalibrierung relevanten Temperaturbereich eine oder mehrere Phasenumwandlungen, insbesondere im festen Zustand, aufweist. Diese Phasenumwandlungen finden bei bekannten, fixen und langzeitstabilen -vorgegebenen Temperaturwerten statt. Wird eine dieser Phasenumwandlungstemperaturen, insbesondere die Curietemperatur, überschritten, so dass eine Phasenumwandlung initiiert wird, entsteht ein markanter Verlauf insbesondere der Dielektrizitätskonstanten des ferroelektrischen Materials als Funktion der Temperatur, welcher zur Kalibrierung genutzt werden kann. Denn die Polarisation des ferroelektrischen Materials verschwindet bei einem bei der Curietemperatur auftretenden Phasenübergang vom ferroelektrischen hin zu einem paraelektrischen Zustand. Das Material, aus dem das Referenzelement also zumindest teilweise besteht, wird dann also paraelektrisch. Ebenso kann natürlich der Phasenübergang vom paraelektrischen in den ferroelektrischen Zustand des Materials, aus dem das Referenzelement wenigstens teilweise besteht, genutzt werden, um den Temperatursensor zu kalibrieren bzw. zu validieren.

Unter einem ferroelektrischen Material, auch Ferroelektrikum genannt, sind Materialien zu verstehen, die auch ohne dass ein elektrisches Feld angelegt ist, insbesondere unterhalb der Curietemperatur, eine elektrische Polarisation besitzen. Diese Polarisation ist auf die Kristallstruktur des ferroelektrischen Materials zurückzuführen. Wird aus einem solchen ferroelektrischen Material ein Kondensatorelement aufgebaut, lässt sich eine typische, oft sprungartige Änderung der dielektrischen Eigenschaften über die entsprechende Änderung seiner elektrischen Kapazität detektieren. Kontinuierlich auftretende Änderungen der Dielektrizitätskonstante mit der Temperatur, wie beispielsweise in der Patentschrift DE 4035952 C1 beschrieben, zur kontinuierlichen Temperaturmessung, werden dabei nicht berücksichtigt. Allein die quasi-diskontinuierlichen (nahezu sprungförmigen) physikalischen, d.h. elektrischen bzw. dielektrischen, Änderungen des bevorzugt als Dielektrikum eines Kondensatorelements dienenden ferroelektrischen Materials bei der Phasenumwandlung können erfasst und ausgewertet werden. Bekannte ferroelektrische Materialien sind z.B. Bariumtitanat, Blei-Zirkonat-Titanat, Strontium-Bismut-Tantalat etc. Weitere solcher ferroelektrischen Materialien sind auch aus dem Stand der Technik bekannt.

Wird als Referenzelement ein Kondensatorelement verwendet, so kann die Messung der Kapazität des Kondensatorelements dabei nach einem aus dem Stand der Technik bekannten Kapazitätsmessprinzip erfolgen. Die Form der Kapazität und die Elektrodenanordnung, welche das Kondensatorelement bilden, sind ebenfalls relativ frei wählbar. Denkbar ist z.B. eine Ausführung als Plattenkondensator oder als Zylinder.

Alternativ kann das ferroelektrische Material auch als Trägersubstrat verwendet werden, auf das bspw. in Dünnschichttechnik Widerstandsstrukturen aufgebracht sind. Die an der Curietemperatur oder anderen Temperaturen mit einem Phasenübergang der Kristallstruktur auftretenden Volumenänderungen des ferroelektrischen Materials bewirken eine charakteristische Änderung des ohmschen Widerstandes der Widerstandsstruktur.

Es wird somit ein Referenzelement vorgeschlagen, das in ein Thermometer integriert, eine materialtypische Fixpunkttemperatur (z.B. die Curietemperatur des bspw. als Dielektrikum verwendeten ferroelektrischen Materials) zur Verfügung stellt. An dieser kann der eigentliche Temperatursensor regelmäßig rekalibriert-sprich die Abweichung seiner Anzeige von der Fixpunkttemperatur ermittelt werden.

Im Gegensatz zum Stand der Technik wird also nicht eine oft nur eingeschränkt bekannte temperaturspezifische Kennlinienänderung eines Referenzelements, wie bspw. eines Sekundärsensors, ausgewertet und auch nicht aus den zeitlich veränderten Eigenschaften des Referenzelements auf die Eigenschaften des zu kalibrierenden Sensors geschlossen. Auftretende Kennlinienänderungen des Temperatursensors lassen sich vielmehr direkt und deutlich genauer und reproduzierbarer über eine solche Fixpunktkalibrierung auch über längere Zeit detektieren und dokumentieren. Darauf aufbauend kann eine automatische Selbstvalidierung und Driftvorhersage des Temperatursensorelements erfolgen. Sowohl die konkrete Einpunkt-Kalibrierung an der Fixpunkttemperatur als auch die ggf. davon abgeleitete Validierung und Alterungsüberwachung des Thermometers bzw. des Temperatursensors können zu diesem Zweck in eine Auswerteelektronik, wie bspw. einem Temperaturtransmitter, implementiert werden.

So kann bspw. aus dem gemessenen Kapazitätsverlauf des Referenzelements der exakte Zeitpunkt der Phasenumwandlung bei der bekannten spezifischen Phasenumwandlungstemperatur des ferroelektrischen Materials bestimmt werden. Aus den parallel dazu kontinuierlich aufgezeichneten Messwerten des zu kalibrierenden Temperatursensors (z.B. ein Pt100) lässt sich insbesondere direkt in einer Vor-Ort-Auswerteelektronik des Thermometers oder auch zu einem späteren Zeitpunkt, oder auch in einer entfernten Auswerteeinheit, derjenige Temperaturmesswert ermitteln, der sich bestmöglich dem Moment der Phasenumwandlung und somit der bekannten Fixpunkttemperatur zuordnen lässt. Durch Bestimmung der Differenz zwischen vom Temperatursensor gemessener Temperatur und Fixpunkt-Soll-Temperatur erfolgt die Validierung und/oder Kalibrierung des Temperatursensors bzw. des Thermometers. Eine Korrektur der Kennlinie des Temperatursensors, eine Angabe der Unsicherheit der Messung oder eine Angabe einer Kennliniendrift über einen definierten Zeitraum bzw. ihrer Historie sind ebenfalls möglich.

In einer Ausgestaltung der Vorrichtung handelt es sich bei dem ferroelektrischen Material um einen Festkörper. Dies bietet im Vergleich zum Stand der Technik den Vorteil, dass keine Fixpunktsubstanz in Form einer Flüssigkeit vorliegt und dass es keiner besonderen Zelle bedarf, um die Fixpunktsubstanz aufzunehmen und also auch nicht das Ansprechverhalten des Temperatursensors auf Temperaturänderungen beeinträchtigt wird.

In einer weiteren Ausgestaltung der Vorrichtung weist das ferroelektrische Material eine Kristallstruktur auf, und bei der Phasenumwandlung wandelt sich die Kristallstruktur des ferroelektrischen Materials. Außer bei der bereits erwähnten Curietemperatur kann es auch bei anderen Temperaturen zu einem Wechsel der Kristallstruktur des ferroelektrischen Materials kommen. Bei Bariumtitanat ist dies bspw. auch bei Temperaturen von ca. -90° C und ca. 5° C der Fall. Auch bei diesen anderen Temperaturen kann dann ein Wechsel in den elektrischen bzw. dielektrischen oder volumetrischen Eigenschaften des ferroelektrischen Materials festgestellt und zur Kalibrierung bzw. Validierung des Temperatursensors genutzt werden. In einer weiteren Ausgestaltung der Vorrichtung weist das ferroelektrische Material also elektrische bzw. dielektrische Eigenschaften auf, die sich bei der Phasenumwandlung ändern.

In einer weiteren Ausgestaltung der Vorrichtung weist das Referenzelement mehr als ein ferroelektrisches Material mit (jeweils) einer oder mehreren Referenztemperaturen auf, welche ebenfalls zur Kalibrierung oder Validierung des Thermometers bzw. des Temperatursensor genutzt werden. Insbesondere besteht das Referenzelement wenigstens teilweise aus mehr als einem ferroelektrischen Material.
In einer weiteren Ausgestaltung der Vorrichtung erfolgt die Phasenumwandlung, insbesondere die Änderung der elektrischen bzw. dielektrischen Eigenschaften, des ferroelektrischen Materials sprungartig bei dem wenigstens einen vorgegebenen Temperaturwert. Dies äußert sich bspw. in einem stufenartigen Verlauf der Dielektrizitätszahl im Bereich des vorgegebenen Temperaturwerts, d.h. der Phasenumwandlungstemperatur.

In einer weiteren Ausgestaltung der Vorrichtung besteht das Referenzelement aus einem Kondensatorelement mit einem Dielektrikum, wobei das Dielektrikum des Kondensatorelements wenigstens teilweise aus dem ferroelektrischen Material besteht. Im Fall eines Kondensatorselements kann dann auch die Kapazität bzw. die Änderung der Kapazität des Kondensatorelements zur Kalibrierung verwendet werden. Die Kapazität eines solchen Kondensatorelements weist insbesondere im Bereich des vorgegebenen Temperaturwerts, d.h. der Phasenübergangstemperatur, ebenfalls einen charakteristischen insbesondere stufenförmigen Verlauf auf.

In einer weiteren Ausgestaltung der Vorrichtung ändert sich bei der Phasenumwandlung das Volumen des ferroelektrischen Materials. Anstelle der elektrischen bzw. dielektrischen Eigenschaften kann, wie bereits erwähnt, eine bei einer Phasenumwandlung auftretende Volumenänderung des ferroelektrischen Materials ausgenutzt werden, um den Temperatursensor zu kalibrieren.

In einer weiteren Ausgestaltung der Vorrichtung dient das ferroelektrische Material als Trägersubstrat für einen Temperatursensor. Insbesondere können der Temperatursensor und Referenzelement auf einem einzigen Trägersubstrat angeordnet sein.

In einer Ausführungsform erfolgt bei der wenigstens einen vorgegebenen Temperatur eine Phasenumwandlung des ferroelektrischen Materials des Trägersubstrats von einem ferroelektrischen Zustand in einen paraelektrischen Zustand bzw. von einem paraelektrischen Zustand in einen ferroelektrischen Zustand und/oder zwischen verschiedenen Kristallstrukturen. Zu diesem Zweck kann ein geeignetes ferroelektrisches Material verwendet werden, welches bspw. auf den Temperaturbereich in dem das Thermometer bzw. der Temperatursensor eingesetzt wird, abgestimmt ist. Die Phasenumwandlung des unterhalb der Curietemperatur ferroelektrischen Materials, aus dem das Trägersubstrat besteht, wirkt sich dann, insbesondere auf die Leitfähigkeit bzw. den ohmschen Widerstand des auf dem Trägersubstrat aufgebrachten Temperatursensors, aus. Diese Änderung kann durch einen Wechsel des elektrischen Zustands des Materials aus dem das Trägersubstrat besteht und/oder auch durch einen Wechsel der Kristallstruktur des Materials, aus dem das Trägersubstrat besteht, hervorgerufen werden.

Ferroelektrika wie Blei-Zirkonat-Titanat PZT und insbesondere Bariumtitanat BaTiO₃ und Strontiumtitanat SrTiO₃ sowie Mischungen der beiden letzteren verfügen über thermisch induzierte Phasenumwandlungen, wobei Längenänderungen der Gitterkonstanten auftreten, die wiederum gerichtete Änderungen des Volumens des Trägersubstrats bewirken und Dehnungs- und Staucheffekte der aufgetragenen Dünnfilme bedingen. Die dadurch bedingte Änderung des elektrischen Widerstands des Widerstandselements kann gemessen werden. Beispielsweise kristallisiert reines Bariumtitanat in polymorphen Gitter-Typen innerhalb der folgenden Temperaturbereiche:
- kubisch T > 120°C
- tetragonal 5°C < T< 120°C
- orthorhombisch -90°C < T < 5°C
- rhomboedrisch T < 90°C

Die gemessenen Änderungen des elektrischen Widerstands des auf dem Trägersubstrat aufgebrachten Widerstandselements eignen sich zur Bestimmung der jeweils vorliegenden Phasenübergangstemperatur.

In einer weiteren Ausgestaltung der Vorrichtung dient das ferroelektrische Material als Trägersubstrat für ein in Dünnschichttechnik oder Dickschichttechnik hergestelltes Widerstandselement. Die Volumenänderung des ferroelektrischen Materials kann, insbesondere in dem Fall, dass ein Temperatursensor auf dem als Trägersubstrat dienenden ferroelektrischen Material aufgebracht ist, zur Kalibrierung herangezogen werden. Dafür kann eine charakteristische Änderung im ohmschen Widerstand des Temperatursensors im Bereich der vorgegebenen Temperatur verwendet werden.

In einer weiteren Ausgestaltung wird ein solches in Dünnschichttechnik hergestelltes Widerstandselement, das als Trägersubstrat ein ferroelektrisches Material aufweist, mit einer Metallisierungsschicht auf der Trägersubstratunterseite, d.h. bspw. der dem Widerstandselement gegenüberliegenden Seite, versehen. Somit ist sowohl eine Änderung des insbesondere ohmschen Widerstandselements als auch- unter Verwendung seiner Widerstandsstruktur als eine erste Elektrode und die metallisierte Trägersubstratunterseite als zweite Elektrode - eine Kapazitätsmessung des dadurch gebildeten Kondensators möglich. Temperatursensor und Referenzelement sind somit in einer Sensorbauform vereint und insbesondere dadurch im Wesentlichen derselben (Umgebungs-)Temperatur ausgesetzt. Das Widerstandselement kann, bspw. als PT100 ausgeführt, als Sensor zur Messung der Temperatur genutzt werden. Die Kapazitätsmessung des Kondensatorelements kann dann zur Bestimmung der Phasenumwandlungstemperatur und/oder als Kalibrierreferenz für das Widerstandselement dienen.

In einer weiteren Ausgestaltung der Vorrichtung handelt es sich bei der vorgegebenen Temperatur um eine Phasenumwandlungstemperatur, und
das ferroelektrische Material ist mit Fremdatomen dotiert, insbesondere um die Phasenumwandlungstemperatur und/oder die Bildung von Kristalldomänen zu beeinflussen. Alternativ kann als Trägersubstrat zur Aufnahme von leitfähigen Dünnfilmen zur Messung des temperaturabhängigen Widerstands eine Reinsubstanz verwendet werden, die unterhalb der Curietemperatur, d.h. der vorgegebenen Temperatur oder anders gesagt der Phasenumwandlungstemperatur, ferroelektrische Eigenschaften aufweist. Dabei können anisotrope Kristalldomänen strukturbildend wirken.

Weiterhin können auch Mischungen aus verschiedenen ferroelektrischen Materialen verwendet werden. Diese Mischungen weisen ebenso Phasenübergänge auf, die mit einer Volumenänderung des Trägersubstrats einhergehen, welche Volumenänderungen sich dann auch wieder auf die Leitfähigkeit bzw. den Widerstand des Widerstandselements auswirken und zur Bestimmung der Temperatur und also zur Kalibrierung des (primären) Temperatursensors dienen können.

In einer weiteren Ausgestaltung der Vorrichtung ist das ferroelektrische Material, insbesondere zum Ausbilden gleichförmiger Kristalldomänen, mit 2-wertigen Erdalkali-lonen und/oder Nebengruppen-Metallionen dotiert. Anteiliges Zudotieren oder Substituieren von zwei-wertigen Erdalkali-Ionen und/oder Nebengruppen-Metallionen in Spuren bzw. Nebenbestandteilkonzentrationen unter 1% kann zum Ausbilden von gleichförmigerer Kristalldomänen in der ferroelektrischen Phase unterhalb der Curietemperatur verwendet werden als es bspw. beim Vorliegen eines Reinmaterials, wie bspw. Bariumtitanat, der Fall ist. Derartige Dotierungen initiieren beim Phasenübergang in den ferroelektrischen Zustand ein gleichförmiges Ausbilden der Korngrenzen und damit eine verbesserte Reproduzierbarkeit der Temperaturabhängig des Phasenübergangs.

In einer weiteren Ausgestaltung der Vorrichtung beträgt der Anteil der Dotierung mit 2-wertigen Erdalkali-Ionen und/oder Nebengruppen-Metallionen am ferroelektrischen Material bis zu 1%.

In einer weiteren Ausgestaltung der Vorrichtung ist das ferroelektrische Material, insbesondere zur Beeinflussung der Phasenumwandlungstemperatur, mit Strontium, Blei und/oder Titanat dotiert.

Dabei kann indem bspw. Strontium zu Bariumtitanat im Bereich über ein 1% dotiert wird, die sonst bei ca. 120°C liegende Curietemperatur von Bariumtitanat zu niedrigeren Temperaturen hin verschoben werden.

In einer weiteren Ausgestaltung der Vorrichtung beträgt der Anteil der Dotierung des ferroelektrischen Materials mit Strontium, Blei und/oder Titanat bis zu 80%. Um eine Dotierung im Bereich von 1% bis 80% einzustellen, kann bspw. Strontiumcarbonat in entsprechenden stöchiometrischen Anteilen anstelle von Bariumcarbonat beim Sinter-Herstellungsverfahren einem Sinterprozess zugrunde liegenden Ausgangsmaterial zugeschlagen werden. Eine Zudotierung von bspw. Blei im Bereich von 1% bis 80% führt zu einer Erhöhung der Phasenumwandlungstemperatur. Für den Sinterprozess kann in diesem Fall Bleicarbonat dem Ausgangsmaterial zugeschlagen werden.
Die Phasenumwandlung und also auch die Volumenänderung des ferroelektrischen Materials können unter Umständen einer Hysterese unterliegen. D.h. die Phasenumwandlung tritt früher oder später auf, je nachdem, ob die Temperaturänderung von einer oberhalb der Phasenumwandlungstemperatur liegenden Temperatur zu einer unterhalb der Phasenumwandlungstemperatur liegenden Temperatur erfolgt oder ob die Temperaturänderung von einer unterhalb der Phasenumwandlungstemperatur liegenden Temperatur zu einer oberhalb der Phasenumwandlungstemperatur liegenden Temperatur erfolgt.

Es hat sich ferner herausgestellt, dass das Ausdehnungsverhalten des Trägersubstrats zusätzlich durch mechanische Spannungen, wie sie beim Einbetten und Beschichten auftreten, beeinflusst wird und abhängig von den jeweils vorherrschenden Aufheiz- bzw. Abkühlraten ist.

In einer weiteren Ausgestaltung der Vorrichtung ist eine zur Polarisation des ferroelektrischen Materials dienende Spannung an das ferroelektrische Material, anlegbar. Dafür weist die Vorrichtung entsprechende Mittel auf. Durch das Anlegen einer elektrischen Spannung kann die temperaturabhängige und unter Umständen hysteretische Volumenänderung des Trägersubstrats bzw. des ferroelektrischen Materials beeinflusst werden. Denn durch das Anlegen einer Spannung kann die Polarisation von Kristalldomänen, durch die ja der ferroelektrische Effekt erzeugt wird, beeinflusst werden. Dadurch kann dann der Übergang zwischen der paraelektrischen und der ferroelektrischen Phase des Materials, aus dem das Trägersubstrat besteht, beeinflusst werden. Insbesondere kann die Polarität und die Stärke der angelegten Spannung variieren. Schließlich kann so -durch Anlegen der Spannung- das hysteretische Phasenumwandlungsverhalten beeinflusst und bewertet werden.

Das Anlegen der Spannung kann auch dazu dienen einen piezoelektrischen Effekt, d.h. eine, insbesondere elastischen, Verformung, hier des Trägersubstrats, hervorzurufen. Die dann auftretenden Verformungen des Trägersubstrats wirken sich auch auf das Widerstandselement und dessen Leitfähigkeit bzw. dessen Widerstand aus, wobei sich die Leitfähigkeit bzw. der Widerstand des Widerstandselements insbesondere während der paraelektrischen und der ferroelektrischen Phase des Materials, aus dem das Trägersubstrat besteht, voneinander unterscheiden. Dies kann ebenfalls als Nachweis einer Phasenumwandlung dienen und zur Kalibrierung des Thermometers bzw. des Temperatursensor herangezogen werden.

Ferner können die, sich auf das Widerstandselement, insbesondere der Dünnfilmbeschichtung, auswirkenden mechanischen Relaxationseigenschaften bzw. Asymmetrien der temperaturabhängigen Widerstände erfasst werden, die beim Anlegen oder nach dem Anlegen der elektrischen Spannung an das Trägersubstrat entstehen. Aufgrund der verschiedenen physikalischen, d.h. mechanischen und/oder elektrischen, Eigenschaften bspw. der paraelektrischen und der ferroelektrischen Phase, kann somit das Überschreiten einer Phasenumwandlungstemperatur, insbesondere der Curietemperatur, nachgewiesen werden.

In einer weiteren Ausgestaltung kann zur Beeinflussung der Phasenumwandlung in der Nähe bzw. knapp unterhalb der Phasenumwandlungstemperatur, insbesondere der Curietemperatur, eine elektrische Spannung angelegt werden, welche Spannung Längenänderungen in der Größenordnung von bis zu 1%, bevorzugt bis zu 0,1%, der Länge des Trägersubstart liegen. So ist bspw. bei reinem Bariumtitanat aufgrund der angelegten Spannung bereits eine Phasenumwandlung unterhalb der Curietemperatur von 120°C beobachtbar. Bei Temperaturen oberhalb der Curietemperatur geht der piezoelektrische, die Längenänderung hervorrufende Effekt aufgrund der paraelektrischen Eigenschaften verloren. Dies kann wiederum zur Kalibrierung des Thermometers bzw. Temperatursensors ausgenutzt werden.

In einer weiteren Ausgestaltung der Vorrichtung ist eine zur Polarisation des Trägersubstrats dienende Spannung, insbesondere über eine Kondensatoranordnung, welche Kondensatoranordnung aus zwei Elektroden besteht, zwischen denen das Trägersubstrat angeordnet ist, anlegbar. Dabei kann das Widerstandselement selbst als eine der zwei Elektroden der Kondensatoranordnung verwendet werden. Auf der gegenüberliegenden Seite des Trägersubstrats kann dann eine Hilfselektrode als zweite der zwei Elektroden der Kondensatoranordnung dienen.

Eine Polarisation des ferroelektrischen Materials, insbesondere des Trägersubstrats, kann auch vermittels zweier separater Hilfselektroden vorgenommen werden. Diesen Hilfselektroden können das Widerstandselement direkt umgeben oder in streifenförmigen, insbesondere kamm- oder meanderartigen Strukturen umfassen. Dabei können die zwei Elektroden von dem Widerstandselement elektrisch isoliert sein. Wichtig ist lediglich, dass ein das Trägersubstrat wenigstens abschnittsweise durchsetzendes elektrische Feld erzeugt wird, das in der ferroelektrischen Phase des Materials einen piezoelektrischen Effekt verursacht.

In einer weiteren Ausgestaltung der Vorrichtung sind der Temperatursensor und das Referenzelement in einem einzigen Sensorkopf angeordnet. Der Sensorkopf ist dabei der Teil des Thermometers, der der Umgebung des Thermometers ausgesetzt ist, deren Temperatur gemessen werden soll. Das Referenzelement und der Temperatursensor können dadurch also im Wesentlichen derselben Umgebungstemperatur ausgesetzt sein. Dies ist besonders hinsichtlich der bevorzugten Verwendung des Thermometers von Nutzen. Denn bspw. in industriellen Anlagen der Lebensmittelindustrie oder Anlagen in denen pharmazeutische Produkte hergestellt werden, in denen Sterilisationsmethoden wie Clean-In-Place, kurz CIP, oder Steam-In-Place, kurz SIP, zum Einsatz kommen, kann die vorgeschlagene Vorrichtung verwendet werden. Denn bei den genannten Verfahren wird bspw. mit heißem Dampf oder Wasser mit einer Temperatur zwischen 120° C und 140° C sterilisiert. Dieser Prozess kann dann zum Kalibrieren des Thermometers eingesetzt werden. Denn bspw. Bariumtitanat BaTiO₃ besitzt eine Curietemperatur von 125°C und bei der also ein Phasenübergang auftritt und kann entsprechend als Material zur Herstellung des Referenzelements verwendet werden.

Das Widerstandselement, welches bspw. in Dünnschichttechnik hergestellt ist und als Trägersubstrat ein ferroelektrisches Material aufweist und ggf. mit einer Hilfselektrode auf der gegenüberliegenden Trägersubstratseite ausgestattet ist, kann insbesondere direkt auf die Innenseite des Sensorkopfes aufgeklebt oder angelötete werden, so dass eine sehr gute elektrischoder auch wärmeleitfähige Verbindung zwischen dem Trägersubstrat bzw. dem Widerstandselement und der Wandung des Thermometers gebildet wird. Eine ähnlich Anordnung ist aus der Offenlegungsschrift DE 102005015691 A1 bekannt geworden. Die typischerweise metallische Wandung des Thermometers dient dann zugleich als Kondensatorelektrode. Diese Anordnung ermöglicht zudem eine deutliche Verringerung der thermischen Ansprechzeiten und statischthermischen bedingten Messabweichungen des Thermometers.

Hinsichtlich des Verfahrens wir die Aufgabe erfindungsgemäß dadurch gelöst, dass zur Kalibrierung ein Referenzelement verwendet wird, wobei das Referenzelement wenigstens teilweise aus einem ferroelektrischen Material gebildet wird, und dass bei zumindest einer vorgegebenen Temperatur eine Phasenumwandlung des ferroelektrischen Materials zur Kalibrierung des Temperatursensors verwendet wird.

In einer Ausgestaltung des Verfahrens wird als ferroelektrisches Material ein Festkörper verwendet.

In einer weiteren Ausgestaltung des Verfahrens verändern sich durch den Phasenübergang des wenigstens teilweise aus dem ferroelektrischen Material bestehenden Festkörpers die Kristallstruktur, das Volumen und/oder die dielektrischen bzw. elektrischen Eigenschaften des ferroelektrischen Materials, wobei wenigstens eine dieser Veränderungen zur Kalibrierung des Temperatursensors verwendet wird.

Die vom Temperatursensor oder Referenzelement erhaltenen Messwerte oder Messsignale können somit ausgewertet werden. Messwerte oder Messsignale können dann entweder zur Kalibrierung und/oder zur Zustandsüberwachung des Temperatursensors bzw. des Thermometers verwendet werden.

In einer weiteren Ausgestaltung des Verfahrens werden der Temperatursensor und das Referenzelement im Wesentlichen derselben Umgebungstemperatur ausgesetzt.

In einer weiteren Ausgestaltung des Verfahrens wird das Thermometer geheizt oder gekühlt, um die Phasenumwandlung des ferroelektrischen Materials bei einer vorgegebenen Temperatur zu induzieren. Das Heizen oder Kühlen des Thermometers, insbesondere des Teilbereichs des Thermometers, in dem sich der Temperatursensor und das Referenzelement befinden, kann dabei entweder durch ein dafür vorgesehenes Heizelement oder durch den Prozess selbst erreicht werden. Dafür kann bspw. ein CIP- oder SIP-Prozess in einer Anlage ausgenutzt werden.

Die in Zusammenhang mit der Vorrichtung erläuterten Ausgestaltungen lassen sich mutatis mutandis auch auf das vorgeschlagene Verfahren anwenden.

In einer weiteren Ausgestaltung des Verfahrens wird ein mit Fremdatomen dotiertes ferroelektrisches Material verwendet, insbesondere um die Phasenumwandlungstemperatur und oder die Bildung von Kristalldomänen zu beeinflussen.

In einer weiteren Ausgestaltung des Verfahrens wird ein mit 2-wertigen Erdalkali-Ionen und/oder Nebengruppen-Metallionen dotiertes ferroelektrisches Material zum Ausbilden gleichförmiger Kristalldomänen verwendet.
In einer weiteren Ausgestaltung des Verfahrens wird ein mit Strontium, Blei und/oder Titanat dotiertes ferroelektrisches Material insbesondere zur Beeinflussung der Phasenumwandlungstemperatur verwendet.

In einer weiteren Ausgestaltung des Verfahrens wird zur Polarisation des ferroelektrischen Materials dienende Spannung an das ferroelektrische Material, angelegt.

In einer weiteren Ausgestaltung des Verfahrens wird eine der Polarisation des Trägersubstrats dienende Spannung, insbesondere vermittels einer Kondensatoranordnung, die aus zwei Elektroden besteht, zwischen denen das Trägersubstrat angeordnet ist, an das Trägersubstrat angelegt.

Die Erfindung wird anhand der nachfolgenden Zeichnungen näher erläutert. Es zeigt:
Fig. 1: eine schematische Darstellung eines Thermometers mit einem Referenzelement in Form eines Plattenkondensators,
Fig. 2: eine schematische Darstellung einer Ausgestaltung, bei der ein Temperatursensors eine Elektrode eines als Plattenkondensator ausgestalteten Referenzelements bildet, und
Fig. 3: eine schematische Darstellung des Verlaufs der Dielektrizitätszahl eines ferroelektrischen Materials als Funktion der Temperatur,
Fig. 4: eine schematische Darstellung der Messwertaufbereitung gemäß einer Ausgestaltung der vorgeschlagenen Erfindung, und
Fig. 5: eine schematische Darstellung einer Ausgestaltung, bei der die Änderung des elektrischen Widerstands bei einer Phasenumwandlungstemperatur eines auf einem Trägersubstrat angeordneten Temperatursensors zur Kalibrierung genutzt wird.

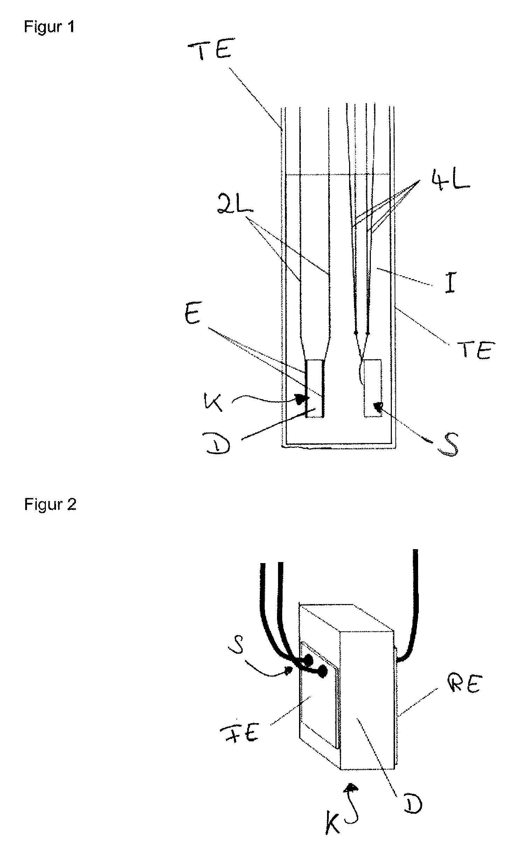

Figur 1 zeigt einen Thermometereinsatz TE in dem ein Temperatursensor S sowie ein Referenzelement K in Form eines Plattenkondensators angeordnet sind. Der Temperatursensor S und das Referenzelement K sind dabei elektrisch voneinander isoliert. Der Temperatursensor S ist im gezeigten Ausführungsbeispiel in Vier-Leiter-Technik angeschlossen, d.h. es sind vier Anschlussleitungen 4L vorgesehen, wobei zwei mit einem Strom beaufschlagt sind und zwei zum Abgreifen einer Messspannung dienen. Selbstverständlich sind es auch möglich, andere Anschlussarten, wie bspw. die Zwei- oder Drei-Leiter-Technik, für den Temperatursensor S zu verwenden. Auch ist es denkbar, eine andere Art von Temperatursensor S als den hier gezeigten Messwiderstand zu wählen.

Um einen dynamischen und/oder statischen Messfehler zu vermeiden, ist das Referenzelement K, das wenigstens teilweise aus einem ferroelektrischen Material besteht, neben dem Temperatursensor S angeordnet und befindet sich daher hinreichend genau auf der gleichen Temperatur wie dieser. In Figur 1 ist das Referenzelement K auf im Wesentlichen gleicher Höhe aber beabstandet von dem Temperatursensor S in dem Temperatureinsatz TE angeordnet. Das Referenzelement K besteht dabei aus zwei diametral zueinander angeordneten Elektroden E, die durch ein Dielektrikum D voneinander getrennt sind, wobei das Dielektrikum D aus einem ferroelektrischen Material, in diesem Fall Bariumtitanat, besteht. Der Temperatureinsatz TE kann bspw. in einen Sensorkopf, der bspw. aus einem Schutzrohr besteht, eingesetzt werden. An dem Schutzrohr wiederum kann ein Temperaturtransmitter angebracht sein, der zum Erzeugen von Messwerten aus den Messsignalen des Referenzelements und des Temperatursensors dient. Das Schutzrohr kann auch über einen Prozessanschluss verfügen, über den es bspw. an einen Behälter wie ein Rohr oder einen Tank angeschlossen werden kann.

Im Ausführungsbeispiel gemäß Figur 1 ist der zu kalibrierende Temperatursensor S bspw. ein Pt100-Dünnschichtwiderstand und in Vier-Leiter-Technik 4L an eine Auswerteelektronik angeschlossen. Die Auswerteelektronik kann dabei ebenfalls in dem Temperaturtransmitter angeordnet sein. Das Referenzelement K ist in Form eines Kondensatorelements mit einer Kapazität ausgeführt und in Zwei-Leiter-Technik an eine Auswerteelektronik, nicht gezeigt, angeschlossen. Temperatursensor und Referenzelement sind in den Thermometereinsatz TE integriert und mit einem elektrisch isolierenden Material, einem Isolator I, in der Spitze des Thermometereinsatzes fixiert. Die vom Temperatursensor und vom Referenzelement aufgenommenen Messsignale können also zu Auswertezwecken einer insbesondere gemeinsamen Auswerteelektronik zugeführt werden. Bei den Messsignalen kann es sich bspw. um die Kapazität des als Kondensatorelement ausgeführten Referenzelements K repräsentierendes Messsignal bzw. um ein den Widerstand des Temperatursensors repräsentierendes Messsignal handeln.

Gemäß dem in Figur 2 gezeigten Ausführungsbeispiel ist das Referenzelement zusammen mit dem Temperatursensor, d.h. dem Primärsensor des Thermometers, in eine Sensorbauform integriert. Das bedeutet, dass zum Beispiel das ferroelektrische Material als Trägersubstrat für einen darauf aufgebrachten Dünnschichtwiderstand fungiert oder ein Thermoelement- oder Widerstandsdraht um das ferroelektrische Material gewickelt ist. Bei dem zu kalibrierenden Temperatursensor S handelt es sich vorzugsweise um einen Pt100 Messwiderstand. Im Gegensatz zur Ausführungsform gemäß Figur 1 ist jedoch seine sensitive Platinschicht auf ein Trägersubstrat aus ferroelektrischem Material aufgebracht. Das Trägersubstrat dient daher einerseits als Träger des Temperatursensors S, hier des Messwiderstandes, andererseits aber dient es auch als Dielektrikum des als Kondensatorelement ausgestalteten Referenzelements (Sekundärsensor), so dass eine Art Doppelsensor entsteht. Das Referenzelement ist auch im Ausführungsbeispiel gemäß Figur 2 als Kondensatorelement aufgebaut, wobei die als Messwiderstand des Temperatursensors dienende Platinschicht eine Elektrode, die sog. Frontelektrode FE, bildet. Auf der gegenüberliegenden Seite des Trägersubstrats befindet sich die zweite Elektrode, die sog. Rückelektrode RE.
Im vorliegenden Ausführungsbeispiel gemäß Figur 2 besitzt die Frontelektrode FE zwei Anschlussdrähte, die sowohl zur Widerstandsmessung als auch zur Kapazitätsmessung genutzt werden, während die Rückelektrode RE nur einen Anschlussdraht für die Kapazitätsmessung aufweist. Selbstverständlich sind auch andere zweckmäßige Anordnungen der Elektroden und Anschlussdrähte möglich, um auf nur einem Trägersubstrat sowohl einen Messwiderstand als auch eine elektrische Kapazität zu integrieren. Die Zahl der angebrachten Anschlussdrähte kann entsprechend der verwendeten Messschaltung angepasst werden. Die in Figur 2 gezeigte Sensorbauform kann analog zur Ausführungsform gemäß Figur 1 in einen Thermometereinsatz integriert sein. Gegebenenfalls nötige Passivierungsschichten oder Zugentlastungen der Anschlussdrähte sind in Figur 2 zur Verbesserung der Anschaulichkeit nicht eingezeichnet.

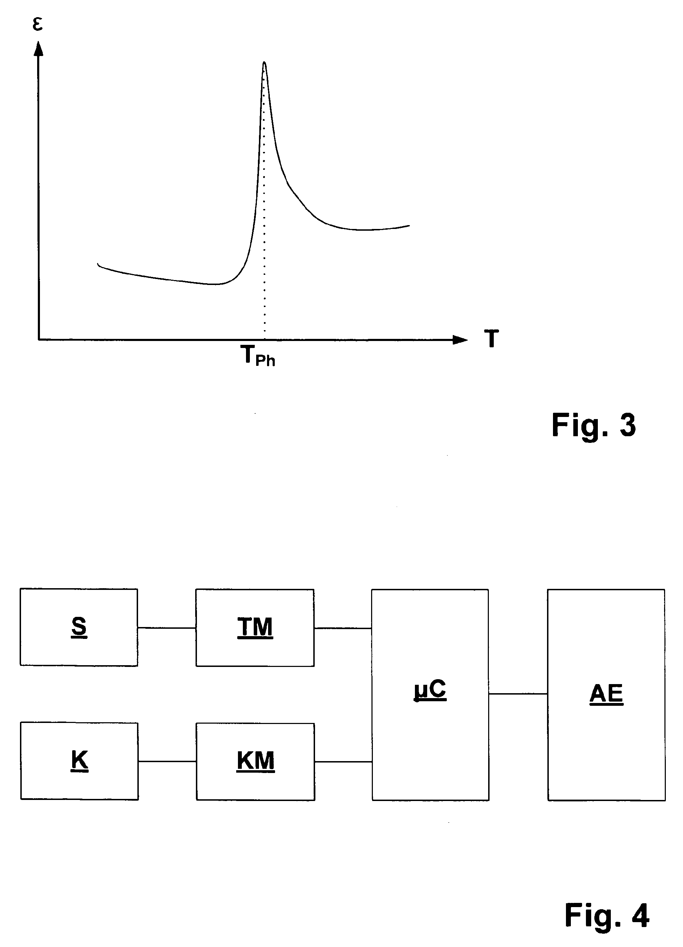

Als Material für das Trägersubstrat gemäß den Ausführungsvarianten in Figur 1 und Figur 2 kann bspw. das Ferroelektrikum Bariumtitanat genutzt werden, das bei ca. 125 °C seine Curietemperatur hat. Bei dieser findet eine seiner Phasenumwandlungen statt. Oberhalb der Curietemperatur weist das Bariumtitanat ein kubisches, unterhalb ein tetragonales Kristallgitter auf. Bariumtitanat weist auch bei anderen Temperaturen Phasenübergänge der Kristallstruktur auf, die ebenfalls zur Kalibrierung genutzt werden können. Heizt man das Thermometer also auf über 125°C auf oder kühlt es unter 125°C ab, wird eine Phasenumwandlung induziert, bei welcher der Verlauf der Dielektrizitätskonstante ein Maximum annimmt (vgl. Figur 3). Die Temperatur T_{Ph} dieses Maximums ist für Bariumtitanat genau bekannt und nicht veränderlich. Da die Temperatur des Temperatursensors S gleichzeitig mit bspw. der Kapazität des Referenzelements, der gewissermaßen als Sekundärsensor dient, gemessen wird, kann man die bekannte Phasenumwandlungstemperatur T_{Ph} mit der vom Temperatursensor S gemessenen Temperatur im Mikroprozessor µC vergleichen, und die Abweichung des Temperatursensors ermitteln. Figur 3 zeigt den Verlauf der Dielektrizitätszahl ε als Funktion der Temperatur T im Bereich in dem bei einem vorgegebenen Temperaturwert T_{Ph} ein Phasenübergang des ferroelektrischen Materials stattfindet. Exemplarisch ist hier der Verlauf der Dielektrizitätszahl ε von Bariumtitanat bei der Curietemperatur gezeigt. Bei Temperaturen unterhalb bzw. überhalb der Phasenübergangstemperatur T_{Ph} schwankt die Dielektrizitätszahl ε nur geringfügig. Genau an der vorgegebenen Temperatur erreicht die Dielektrizitätszahl ε abrupt ein Maximum. Dieses Maximum der Dielektrizitätszahl oder auch andere reproduzierbare Punkte, insbesondere in einem Kurvenverlauf, um eine Phasenübergangstemperatur T_{Ph} können als Fix- bzw. Referenzpunkt zum Kalibrieren des Temperatursensors S verwendet werden.

Figur 4 zeigt eine schematische Darstellung der Funktionsweise einer Ausgestaltung der vorliegenden Erfindung. Mittels eines Temperatursensors S wird eine Temperaturmessung TM durchgeführt. Handelt es sich bei dem Referenzelement K um ein Kondensatorelement, bspw. gemäß der Ausgestaltung in Figur 1, so wird eine Kapazitätsmessung durchgeführt. Als Messgröße des Referenzelements, die zur Kalibrierung des Temperatursensors herangezogen werden, sind auch andere physikalische Größen denkbar. Die Kapazitätsmessung und die Temperaturbestimmung kann dabei von einer Auswerteelektronik durchgeführt werden. In einem Mikroprozessor µC werden die so aufgenommen Messwerte der Kapazität des Kondensatorelements und der Temperatur des Temperatursensors S ausgewertet, indem sie bspw. miteinander und/oder mit hinterlegten Werten verglichen werden, und gegebenenfalls eine Kalibrierung des Temperatursensors S durchgeführt. Die Kalibrierung kann bspw. beim Vorliegen einer Abweichung des vom Temperatursensor S gemessenen zum tatsächlich vorliegenden Temperaturwert, die einen vorgegebenen Schwellwert überschreitet, erfolgen. Der Mikroprozessor kann dabei ebenfalls Teil der Auswerteelektronik sein. Die Messwerte des Referenzelements und des Temperatursensors können auch über die Ausgangselektronik des Thermometers bspw. an eine entfernte Auswerteelektronik, nicht gezeigt, kommuniziert werden.

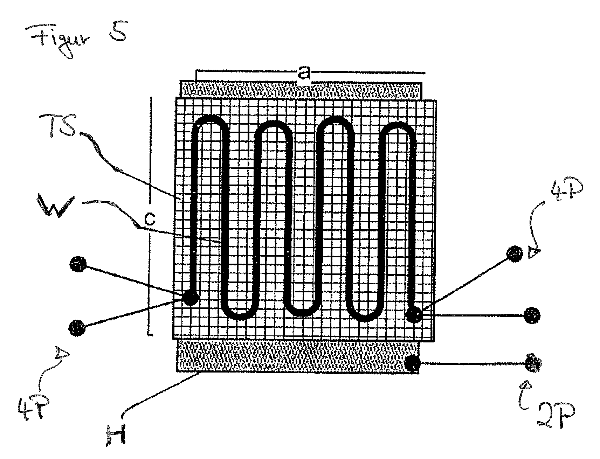

Figur 5 zeigt ein weiteres Ausführungsbeispiel der vorliegenden Erfindung. Als Temperatursensor S dient dabei ein Widerstandselement W, das auf ein ferroelektrisches Material, das als Trägersubstart TS dient, aufgebracht ist. Im in Figur 5 gezeigten Ausführungsbeispiel ist das Widerstandselement W meanderförmig auf dem Trägersubstrat TS angeordnet und ist in Vier-Punkt-Technik kontaktiert. Auf der dem Widerstandselement W gegenüberliegenden Seite des Trägersubstrats TS ist eine, insbesondere flächige, Hilfselektrode H angeordnet. Über die Hilfselektrode H kann eine elektrische Spannung an das Trägersubstrat TS angelegt werden, so dass ein elektrisches Feld zumindest das Trägersubstrat TS wenigstens teilweise durchsetzt. Durch das Anlegen eines elektrischen Feldes an das Trägersubstrat TS kann eine mechanische Verformung des Trägersubstrats TS gemäß dem Piezo-Effekt bewirkt werden. Aus der Verformung lassen sich Rückschlüsse über die momentane Phase des Materials aus dem das Trägersubstart TS besteht, ziehen. Daraus lässt sich dann feststellen ob die Phasenumwandlungstemperatur T_{Ph} überschritten wurde. Diese Phasenumwandlungstemperatur T_{Ph} dient dann als Fixpunkt zur Kalibrierung des Widerstandselements W. Ferner kann durch vermittels der angelegten Spannung eine Polarisation des ferroelektrischen Trägersubstrats TS erzeugt werden. Aus der induzierten Polarisation lassen sich dann auch Rückschlüsse über die momentane Phase des Trägersubstrats TS ziehen. Auch kann durch das Anlegen der Spannung eine Änderung der Polarisation der Domänen in dem ferroelektrischen Material erreicht werden und so eine reproduzierbare Phasenumwandlung insbesondere zwischen Phasen mit unterschiedlichen elektrischen Eigenschaften hergestellt werden.

Auch im Ausführungsbeispiel gemäß Figur 5 sind dann vergleichbar zu dem Ausführungsbeispiel in Figur 2 der Temperatursensor und das Referenzelement in eine Sensorbauform integriert.

Es sind auch andere Ausgestaltungen bspw. bzgl. der Kontaktierung der Hilfselektrode H und des Widerstandselement mit aus dem Stand der Technik bekannten Mitteln möglich. Weiterhin besteht auch eine Vielzahl dem Fachmann geläufige Möglichkeiten, insbesondere um einem Ausgestaltungsbeispiel der vorliegenden Erfindung gemäß, eine Kondensatoranordnung zu realisieren.

### Bezugszeichenliste

- TE: Thermometereinsatz
- 2L: Anschlussleitungen für das Referenzelement
- 4L: Anschlussleitungen für den Temperatursensor
- E: Elektroden
- D: Dielektrikum
- FE: Frontelektrode
- RE: Rückelektrode
- I: Isolator
- T: Temperatur
- ε: Dielektrizitätszahl
- T_{Ph}: Phasenübergangstemperatur
- S: Temperatursensor
- K: Referenzelement
- TM: Temperaturmessung
- KM: Kapazitätsmessung
- µC: Mikroprozessor
- AE: Ausgangselektronik
- TS: Trägersubstrat
- W: Widerstandselement
- 4P: Kontaktierung des Widerstandselements
- 2P: Kontaktierung der Hilfselektrode
- H: Hilfselektrode
- a: erste Ausdehnungsrichtung
- c: zweite Ausdehnungsrichtung

## Patentansprüche

1. Vorrichtung zur in situ Kalibrierung eines Thermometers,
wobei die Vorrichtung einen Temperatursensor (S), zur Bestimmung einer Temperatur (T), aufweist, wobei ein Referenzelement (K) zur Kalibrierung des Temperatursensors (S) vorgesehen ist,
**dadurch gekennzeichnet, dass**
das Referenzelement (K) wenigstens teilweise aus einem ferroelektrischen Material (D) besteht, das im zur Kalibrierung des Temperatursensors (S) relevanten Temperaturbereich eine Phasenumwandlung bei zumindest einer vorgegebenen Temperatur (T_{Ph}) erfährt.

2. Vorrichtung nach Anspruch 1,
**dadurch gekennzeichnet,**
**dass** es sich bei dem ferroelektrischen Material (D) um einen Festkörper handelt.

3. Vorrichtung nach Anspruch 1 oder 2,
**dadurch gekennzeichnet,**
**dass** das ferroelektrische Material (D) eine Kristallstruktur aufweist, und
**dass** sich bei der Phasenumwandlung die Kristallstruktur des ferroelektrischen Materials (D) wandelt.

4. Vorrichtung nach Anspruch 1, 2 oder 3,
**dadurch gekennzeichnet,**
**dass** sich bei der Phasenumwandlung das Volumen des ferroelektrischen Materials (D) ändert.

5. Vorrichtung nach einem der vorherigen Ansprüche,
**dadurch gekennzeichnet,**
**dass** das ferroelektrische Material (D) elektrische bzw. dielektrische Eigenschaften aufweist, die sich bei der Phasenumwandlung ändern.

6. Vorrichtung nach einem der vorherigen Ansprüche,
**dadurch gekennzeichnet,**
**dass** die Phasenumwandlung, insbesondere die Änderung der elektrischen bzw. dielektrischen Eigenschaften, des ferroelektrischen Materials (D) sprungartig bei dem wenigstens einen vorgegebenen Temperaturwert (T_{Ph}) erfolgt.

7. Vorrichtung nach einem der vorherigen Ansprüche,
**dadurch gekennzeichnet,**
**dass** das Referenzelement (K) aus einem Kondensatorelement mit einem Dielektrikum besteht, wobei das Dielektrikum des Kondensatorelements wenigstens teilweise aus dem ferroelektrischen Material (D) besteht.

8. Vorrichtung nach einem der vorherigen Ansprüche 1 bis 6,
**dadurch gekennzeichnet,**
**dass** das ferroelektrische Material (D) als Trägersubstrat für einen Temperatursensor (S) dient.

9. Vorrichtung nach dem vorherigen Anspruch,
**dadurch gekennzeichnet,**
**dass** bei der wenigstens einen vorgegebenen Temperatur eine Phasenumwandlung des ferroelektrischen Materials des Trägersubstrats von einem ferroelektrischen Zustand in einen paraelektrischen Zustand bzw. von einem paraelektrischen Zustand in einen ferroelektrischen Zustand und/oder zwischen verschiedenen Kristallstrukturen erfolgt.

10. Vorrichtung nach Anspruch 8 oder 9,
**dadurch gekennzeichnet,**
**dass** das ferroelektrische Material (D) als Trägersubstrat für ein in Dünnschichttechnik oder Dickschichttechnik hergestelltes Widerstandselement dient.

11. Vorrichtung nach einem der vorherigen Ansprüche,
**dadurch gekennzeichnet,**
**dass** es sich bei der vorgegebenen Temperatur um eine Phasenumwandlungstemperatur handelt, und
**dass** das ferroelektrische Material mit Fremdatomen dotiert ist, insbesondere um die Phasenumwandlungstemperatur und/oder die Bildung von Kristalldomänen zu beeinflussen.

12. Vorrichtung nach einem der vorherigen Ansprüche,
**dadurch gekennzeichnet,**
**dass** das ferroelektrische Material, insbesondere zum Ausbilden gleichförmiger Kristalldomänen, mit 2-wertigen Erdalkali-Ionen und/oder Nebengruppen-Metallionen dotiert ist.

13. Vorrichtung nach dem vorherigen Anspruch,
**dadurch gekennzeichnet,**
**dass** der Anteil der Dotierung mit 2-wertigen Erdalkali-Ionen und/oder Nebengruppen-Metallionen am ferroelektrischen Material bis zu 1% beträgt.

14. Vorrichtung nach einem der vorherigen Ansprüche,
**dadurch gekennzeichnet,**
**dass** das ferroelektrische Material, insbesondere zur Beeinflussung der Phasenumwandlungstemperatur, mit Strontium, Blei und/oder Titanat dotiert ist.

15. Vorrichtung nach dem der vorherigen Anspruch,
**dadurch gekennzeichnet,**
**dass** der Anteil der Dotierung des ferroelektrischen Materials mit Strontium, Blei und/oder Titanat bis zu 80% beträgt.

16. Vorrichtung nach einem der vorherigen Ansprüche,
**dadurch gekennzeichnet,**
**dass** eine zur Polarisation des ferroelektrischen Materials dienende Spannung an das ferroelektrische Material, anlegbar ist.

17. Vorrichtung nach einem der vorherigen Ansprüche,
**dadurch gekennzeichnet,**
**dass** eine zur Polarisation des Trägersubstrats dienende Spannung, insbesondere über eine Kondensatoranordnung, welche Kondensatoranordnung aus zwei Elektroden besteht, zwischen denen das Trägersubstrat angeordnet ist, anlegbar ist.

18. Vorrichtung nach einem der vorherigen Ansprüche,
**dadurch gekennzeichnet,**
**dass** der Temperatursensor (S) und das Referenzelement (K) in einem einzigen Sensorkopf angeordnet sind.

19. Verfahren zur in situ Kalibrierung eines Thermometers,
wobei zur Bestimmung der Temperatur (T) ein Temperatursensor (S) verwendet wird,
wobei zur Kalibrierung ein Referenzelement (K) verwendet wird,
**dadurch gekennzeichnet, dass**
das Referenzelement (K) wenigstens teilweise aus einem ferroelektrischen Material (D) besteht, und
dass bei zumindest einer vorgegebenen Temperatur (T_{Ph}) eine Phasenumwandlung des ferroelektrischen Materials (D) zur Kalibrierung des Temperatursensors (S) verwendet wird.

20. Verfahren nach Anspruch 19,
**dadurch gekennzeichnet,**
**dass** als ferroelektrisches Material (D) ein Festkörper verwendet wird.

21. Verfahren nach Anspruch 19 oder 20,
**dadurch gekennzeichnet,**
**dass** durch die Phasenumwandlung des wenigstens teilweise aus dem ferroelektrischen Material (D) bestehenden Festkörpers sich die Kristallstruktur, das Volumen und/oder die dielektrischen bzw. elektrischen Eigenschaften des ferroelektrischen Materials (D) verändern, und dass wenigstens eine dieser Veränderungen zur Kalibrierung des Temperatursensors (S) verwendet wird.

22. Verfahren nach einem der Ansprüche 19 bis 21,
**dadurch gekennzeichnet,**
**dass** der Temperatursensor (S) und das Referenzelement (K) im Wesentlichen derselben Umgebungstemperatur ausgesetzt werden.

23. Verfahren nach einem der Ansprüche 19 bis 22,
**dadurch gekennzeichnet,**
**dass** das Thermometer geheizt oder gekühlt wird, um die Phasenumwandlung des ferroelektrischen Materials (D) bei der vorgegebenen Temperatur (T_{Ph}) zu induzieren.

24. Verfahren nach einem der Ansprüche 19 bis 23,
**dadurch gekennzeichnet,**
**dass** ein mit Fremdatomen dotiertes ferroelektrisches Material verwendet wird, insbesondere um die Phasenumwandlungstemperatur und oder die Bildung von Kristalldomänen zu beeinflussen.

25. Verfahren nach einem der Ansprüche 19 bis 24,
**dadurch gekennzeichnet,**
**dass** ein mit 2-wertigen Erdalkali-Ionen und/oder Nebengruppen-Metallionen dotiertes ferroelektrisches Material zum Ausbilden gleichförmiger Kristalldomänen verwendet wird,

26. Verfahren nach einem der Ansprüche 19 bis 25,
**dadurch gekennzeichnet,**
**dass** ein mit Strontium, Blei und/oder Titanat dotiertes ferroelektrisches Material insbesondere zur Beeinflussung der Phasenumwandlungstemperatur verwendet wird.

27. Verfahren nach einem der Ansprüche 19 bis 26,
**dadurch gekennzeichnet,**
**dass** eine zur Polarisation des ferroelektrischen Materials dienende Spannung an das ferroelektrische Material, anlegbar wird.

28. Verfahren nach einem der Ansprüche 19 bis 27,
**dadurch gekennzeichnet,**
**dass** eine der Polarisation des Trägersubstrats dienende Spannung, insbesondere vermittels einer Kondensatoranordnung, die aus zwei Elektroden besteht, zwischen denen das Trägersubstrat angeordnet ist, an das Trägersubstrat angelegt wird.

## Claims

1. Apparatus for the in situ calibration of a thermometer,
wherein the apparatus has a temperature sensor (S) for the determination of a temperature (T),
wherein a reference element (K) is provided for the calibration of the temperature sensor (S),
**characterized in that**
the reference element (K) at least partially consists of a ferroelectric material (D), which undergoes a phase transformation at least at a predefined temperature (T_{Ph}) in the temperature range that is relevant for the calibration of the temperature sensor (S).

2. Apparatus as claimed in Claim 1,
**characterized in that**
the ferroelectric material (D) **is** a solid body.

3. Apparatus as claimed in Claim 1 or 2,
**characterized in that**
the ferroelectric material (D) has a crystalline structure, and **in that** the crystalline structure of the ferroelectric material (D) changes during the phase transformation.

4. Apparatus as claimed in Claim 1, 2 or 3,
**characterized in that**
the volume of the ferroelectric material (D) changes during the phase transformation.

5. Apparatus as claimed in one of the previous claims,
**characterized in that**
the ferroelectric material (D) has electric or dielectric properties that change during the phase transformation.

6. Apparatus as claimed in one of the previous claims,
**characterized in that**
the phase transformation, particularly the change in the electric or dielectric properties, of the ferroelectric material (D) takes place abruptly at the at least one predefined temperature value (T_{Ph}).

7. Apparatus as claimed in one of the previous claims,
**characterized in that**
the reference element (K) consists of a capacitor element with a dielectric, wherein the dielectric of the capacitor element consists at least partially of the ferroelectric material (D).

8. Apparatus as claimed in one of the previous Claims 1 to 6,
**characterized in that**
the ferroelectric material (D) acts as the carrier substrate for a temperature sensor (S).

9. Apparatus as claimed in one of the previous claims,
**characterized in that**
at the at least one predefined temperature, the ferroelectric material of the carrier substrate undergoes a phase transformation from a ferroelectric state to a paraelectric state or from a paraelectric state to a ferroelectric state and/or between different crystalline structures.

10. Apparatus as claimed in Claims 8 or 9,
**characterized in that**
the ferroelectric material (D) serves as the carrier substrate for a resistance element produced according to thin-layer technology or thick-layer technology.

11. Apparatus as claimed in one of the previous claims,
**characterized in that**
the predefined temperature is a phase-transformation temperature
and
that the ferroelectric material is doped with foreign atoms, particularly in order to influence the phase transformation temperature and/or the formation of crystalline domains.

12. Apparatus as claimed in one of the previous claims,
**characterized in that**
the ferroelectric material is doped with bivalent alkaline earth ions and/or transition metal ions, particularly for the formation of uniform crystalline domains.

13. Apparatus as claimed in the previous claim,
**characterized in that**
the share of doping with bivalent alkaline earth ions and/or transition metal ions on the ferroelectric metal is up to 1 %.

14. Apparatus as claimed in one of the previous claims,
**characterized in that**
the ferrorelectric material is doped with strontium, lead and/or titanate, particularly to influence the phase transformation temperature.

15. Apparatus as claimed in the previous claim,
**characterized in that**
the share of doping of the ferroelectric material with strontium, lead and/or titanate is up to 80%.

16. Apparatus as claimed in one of the previous claims,
**characterized in that**
a voltage, which is used for the polarization of the ferroelectric material, can be applied to the ferroelectric material.

17. Apparatus as claimed in one of the previous claims,
**characterized in that**
a voltage, which is used for the polarization of the carrier substrate, can be applied particularly via a capacitor arrangement, which consists of two electrodes between which the carrier substrate is arranged.

18. Apparatus as claimed in one of the previous claims,
**characterized in that**
the temperature sensor (S) and the reference element (K) are arranged in a single sensor head.

19. Procedure for the in situ calibration of a thermometer,
wherein a temperature sensor (S) is used to determine the temperature (T), wherein a reference element (K) is used for the calibration,
**characterized in that**
the reference element (K) at least partially consists of a ferroelectric material (D), and
**in that** a phase transformation of the ferroelectric material (D) is used to calibrate the temperature sensor (S) at least at a predefined temperature (T_{Ph}).

20. Procedure as claimed in Claim 19,
**characterized in that**
a solid body is used as the ferroelectric material (D).

21. Procedure as claimed in Claim 19 or 20,
**characterized in that**
the crystalline structure, the volume and/or the dielectric and/or electric properties of the ferroelectric material (D) change as a result of the phase transformation of the solid body which consists at least partially of the ferroelectric material (D), and **in that** at least one of these changes is used to calibrate the temperature sensor (S).

22. Procedure as claimed in one of the Claims 19 to 21,
**characterized in that**
the temperature sensor (S) and the reference element (K) are essentially exposed to the same ambient temperature.

23. Procedure as claimed in one of the Claims 19 to 22,
**characterized in that**
the thermometer is heated or cooled in order to induce the phase transformation of the ferroelectric material (D) at the predefined temperature (T_{Ph}).

24. Procedure as claimed in one of the Claims 19 to 23,
**characterized in that**
a ferroelectric material doped with foreign atoms is used, particularly in order to influence the phase transformation temperature and/or the formation of crystalline domains.

25. Procedure as claimed in one of the Claims 19 to 24,
**characterized in that**
a ferroelectric material doped with bivalent alkaline earth ions and/or transition metal ions is used for the formation of uniform crystalline domains.

26. Procedure as claimed in one of the Claims 19 to 25,
**characterized in that**
a ferroelectric material doped with strontium, lead and/or titanate is used particularly in order to influence the phase transformation temperature.

27. Procedure as claimed in one of the Claims 19 to 26,
**characterized in that**
a voltage, which is used for the polarization of the ferroelectric material, can be applied to the ferroelectric material.

28. Procedure as claimed in one of the Claims 19 to 27,
**characterized in that**
a voltage, which is used for the polarization of the carrier substrate, is applied to the carrier substrate, particularly via a capacitor arrangement, which consists of two electrodes between which the carrier substrate is arranged.

## Revendications

1. Dispositif destiné à l'étalonnage in situ d'un thermomètre,
lequel dispositif comporte un capteur de température (S) destiné à la détermination d'une température (T),
pour lequel est prévu un élément de référence (K) destiné à l'étalonnage du capteur de température (S),
**caractérisé**
**en ce que** l'élément de référence (K) est constitué au moins partiellement d'un matériau ferroélectrique (D), qui subit un changement de phase à au moins une température (T_{Ph}) prédéfinie, dans la gamme de température pertinente pour l'étalonnage du capteur de température (S).

2. Dispositif selon la revendication 1,
**caractérisé**
**en ce que**, concernant le matériau ferroélectrique (D), il s'agit d'un corps solide.

3. Dispositif selon la revendication 1 ou 2,
**caractérisé**
**en ce que** le matériau ferroélectrique (D) présente une structure cristalline, et en ce que, lors du changement de phase, la structure cristalline du matériau ferroélectrique (D) change.

4. Dispositif selon la revendication 1, 2 ou 3,
**caractérisé**
**en ce que**, lors du changement de phase, le volume du matériau ferroélectrique (D)change.

5. Dispositif selon l'une des revendications précédentes,
**caractérisé**
**en ce que** le matériau ferroélectrique (D) présente des propriétés électriques ou diélectriques, qui changent lors du changement de phase.

6. Dispositif selon l'une des revendications précédentes,
**caractérisé**
**en ce que** le changement de phase, notamment la modification des propriétés électriques ou diélectriques, du matériau ferroélectrique (D) intervient par à-coups à l'au moins une valeur de température (T_{Ph}) prédéfinie.

7. Dispositif selon l'une des revendications précédentes,
**caractérisé**
**en ce que** l'élément de référence (K) se compose d'un élément de condensateur avec un diélectrique, le diélectrique de l'élément de condensateur étant constitué au moins partiellement du matériau ferroélectrique (D).

8. Dispositif selon l'une des revendications précédentes 1 à 6,
**caractérisé**
**en ce que** le matériau ferroélectrique (D) sert de substrat de support pour un capteur de température (S).

9. Dispositif selon la revendication précédente,
**caractérisé**
**en ce qu'**à l'au moins une température prédéfinie se produit un changement de phase du matériau ferroélectrique du substrat de support d'un état ferroélectrique dans un état paraélectrique, ou d'un état paraélectrique dans un état ferroélectrique, et/ou entre différentes structures cristallines.

10. Dispositif selon la revendication 8 ou 9,
**caractérisé**
**en ce que** le matériau ferroélectrique (D) sert de substrat de support pour un élément résistif fabriqué selon la technique à couche mince ou selon la technique à couche épaisse.

11. Dispositif selon l'une des revendications précédentes,
**caractérisé**
**en ce que**, concernant la température prédéfinie, il s'agit d'une température de changement de phase
et
**en ce que** le matériau ferroélectrique est dopé avec des atomes étrangers, notamment afin d'influencer la température de changement de phase et/ou la formation de domaines cristallins.

12. Dispositif selon l'une des revendications précédentes,
**caractérisé**
**en ce que** le matériau ferroélectrique est dopé avec des ions alcalinoterreux bivalents et/ou des ions métalliques de groupes secondaires, notamment pour la formation de domaines cristallins uniformes.

13. Dispositif selon la revendication précédente,
**caractérisé**
**en ce que** le taux de dopage du matériau ferroélectrique avec des ions alcalinoterreux bivalents et/ou des ions métalliques de groupes secondaires s'élève à jusqu'à 1 %.

14. Dispositif selon l'une des revendications précédentes,
**caractérisé**
**en ce que** le matériau ferroélectrique est dopé avec du strontium, du plomb et/ou du titanate, notamment pour l'influence de la température de changement de phase.

15. Dispositif selon la revendication précédente,
**caractérisé**
**en ce que** le taux de dopage du matériau ferroélectrique en strontium, plomb et/ou titanate s'élève à jusqu'à 80 %.

16. Dispositif selon l'une des revendications précédentes,
**caractérisé**
**en ce qu'**est applicable au matériau ferroélectrique une tension destinée à la polarisation du matériau ferroélectrique.

17. Dispositif selon l'une des revendications précédentes,
**caractérisé**
**en ce qu'**est applicable une tension destinée à la polarisation du substrat de support, notamment par l'intermédiaire d'un ensemble de condensateurs, qui se compose de deux électrodes, entre lesquelles le substrat de support est disposé.

18. Dispositif selon l'une des revendications précédentes,
**caractérisé**
**en ce que** le capteur de température (S) et l'élément de référence (K) sont disposés dans une unique tête de capteur.

19. Procédé destiné à l'étalonnage in situ d'un thermomètre,
pour lequel est utilisé un capteur de température (S) pour la détermination de la température (T),
pour lequel est utilisé un élément de référence (K) pour l'étalonnage, **caractérisé**
**en ce que** l'élément de référence (K) est constitué au moins partiellement d'un matériau ferroélectrique (D), et
**en ce qu'**est utilisé un changement de phase du matériau ferroélectrique (D) pour l'étalonnage du capteur de température (S) à au moins une température (T_{Ph}) prédéfinie.

20. Procédé selon la revendication 19,
**caractérisé**
**en ce qu'**est utilisé un corps solide en tant que matériau ferroélectrique (D).

21. Procédé selon la revendication 19 ou 20,
**caractérisé**
**en ce qu'**en raison du changement de phase du corps solide constitué au moins partiellement du matériau ferroélectrique (D), la structure cristalline, le volume et/ou les propriétés diélectriques ou électriques du matériau ferroélectrique (D) changent, et en ce qu'au moins l'un de ces changements est utilisé pour l'étalonnage du capteur de température (S).

22. Procédé selon l'une des revendications 19 à 21,
**caractérisé**
**en ce que** le capteur de température (S) et l'élément de référence (K) sont exposés pour l'essentiel à la même température ambiante.

23. Procédé selon l'une des revendications 19 à 22,
**caractérisé**
**en ce que** le thermomètre est chauffé ou refroidi afin d'induire le changement de phase du matériau ferroélectrique (D) à la température (T_{Ph}) prédéfinie.

24. Procédé selon l'une des revendications 19 à 23,
**caractérisé**
**en ce qu'**est utilisé un matériau ferroélectrique dopé avec des atomes étrangers, notamment pour influencer la température de changement de phase et/ou la formation de domaines cristallins.

25. Procédé selon l'une des revendications 19 à 24,
**caractérisé**
**en ce qu'**est utilisé un matériau ferroélectrique dopé avec des ions alcalinoterreux bivalents et/ou des ions métalliques de groupes secondaires pour la formation de domaines cristallins uniformes.

26. Procédé selon l'une des revendications 19 à 25,
**caractérisé**
**en ce qu'**est utilisé un matériau ferroélectrique dopé avec du strontium, du plomb et/ou du titanate, notamment pour l'influence de la température de changement de phase.

27. Procédé selon l'une des revendications 19 à 26,
**caractérisé**
**en ce qu'**une tension servant à la polarisation du matériau ferroélectrique peut être appliquée au matériau ferroélectrique.

28. Procédé selon l'une des revendications 19 à 27,
**caractérisé**
**en ce qu'**est appliquée au substrat de support une tension destinée à la polarisation du substrat de support, notamment au moyen d'un ensemble de condensateurs, qui se compose de deux électrodes, entre lesquelles le substrat de support est disposé.
